# EUROPÄISCHE PATENTSCHRIFT

(11) **EP 3 456 593 B1**
(45) Veröffentlichungstag und Bekanntmachung des Hinweises auf die Patenterteilung: **18.03.2020**
(21) Anmeldenummer: 18187888.5
(22) Anmeldetag: 08.08.2018
(51) Int. Cl.: B60S 3/04, A46B 11/06

(54) **BÜRSTENHALTER FÜR EINE WASCHBÜRSTE UND WASCHBÜRSTE**
WASHING BRUSH AND BRUSH HOLDER FOR A WASHING BRUSH
PORTE-BROSSE POUR UNE BROSSE DE LAVAGE ET BROSSE DE LAVAGE

(30) Priorität: 18.09.2017 DE 202017105639 U
(43) Veröffentlichungstag der Anmeldung: 20.03.2019
(73) Patentinhaber: WashTec Holding GmbH, 86153 Augsburg (DE)
(72) Erfinder: BRÖDEL, Thomas, 86199 Augsburg (DE); MAYER, Stefan, 86356 Neusäß (DE)
(74) Vertreter: Reitstötter Kinzebach

(56) Entgegenhaltungen:
- WO-A2-2014/039619
- DE-U1-202004 001 660

## Beschreibung

Die vorliegende Erfindung betrifft einen Bürstenhalter für eine Waschbürste mit einem Abschnitt, welcher eine Wand aufweist und in welchen ein Druckfluid einleitbar ist. Der Abschnitt weist in einem aktiven Zustand ohne Anliegen eines von dem Druckfluid erzeugten Fluiddruckes eine erste Knicksteifigkeit auf, mit welcher der Abschnitt im inaktiven Zustand biegeflexibel ist. Ferner betrifft die Erfindung eine Waschbürste mit einem solchen Bürstenhalter und einem Bürstenkopf.

An Selbstbedienungs-Waschanlagen werden Waschbürsten zur Verfügung gestellt, mittels welchen ein Kunde sein Fahrzeug selbst waschen kann. Um zu verhindern, dass Personen ihr Fahrzeug ohne Geldeinwurf an einem Selbstbedienungs-Waschplatz reinigen können, wurde vorgeschlagen, diese Waschbürsten als Knickbürsten auszugestalten. Dies bedeutet, dass ein Teil des Bürstenhalters im nicht aktiven Zustand so weich ist, dass der Bürstenkopf schlaff herunterhängt, so dass er nicht entlang einer Fahrzeugoberfläche geführt werden kann.

Die WO 2014/039619 A2 beschreibt hierzu eine Waschbürste, deren Bürstenhalter einen flexiblen Teil aufweist, in welchen ein mechanischer Schieber nach vorne geschoben wird, wenn ein Fluiddruck anliegt. Dadurch wird der flexible Teil von innen versteift.

Nachteilig an einer solchen Waschbürste ist, dass sie aufgrund der notwendigen mechanischen Teile verschleißbehaftet ist. Weiterhin kann die Waschbürste nicht mit einem zentralen Waschwasserverteiler betrieben werden, da die Mechanik sehr empfindlich auf unterschiedliche Vordrücke reagiert. Eine solche Waschbürste ist außerdem kompliziert im Aufbau und kann im Wartungsfall schwer demontiert und wieder montiert werden. Zudem ist eine solche Waschbürste teuer in der Herstellung.

Es ist daher die Aufgabe der vorliegenden Erfindung, einen Bürstenhalter und eine Waschbürste der eingangs genannten Art bereitzustellen, welche kostengünstig herzustellen und einfach zu warten sind.

Diese Aufgabe wird erfindungsgemäß durch einen Bürstenhalter mit den Merkmalen des Anspruchs 1 und eine Waschbürste mit den Merkmalen des Anspruchs 14 gelöst. Vorteilhafte Aus- und Weiterbildungen ergeben sich aus den abhängigen Ansprüchen.

Der erfindungsgemäße Bürstenhalter ist dadurch gekennzeichnet, dass in einem aktiven Zustand in den Abschnitt das Druckfluid eingeleitet ist, wobei der Abschnitt im aktiven Zustand eine zweite Knicksteifigkeit aufweist, welche dadurch erzeugt wird, dass das in den Abschnitt eingeleitete Druckfluid einen Fluiddruck direkt auf die Wand des Abschnitts ausübt, so dass der Abschnitt im Wesentlichen biegeunflexibel ist.

Erfindungsgemäß wird der Fluiddruck also direkt auf die Wand des Abschnitts ausgeübt. Zwischen dem Druckfluid und der Wand des Abschnitts befinden sich keine zusätzlichen Bauteile, die eine Versteifung des Abschnitts hervorrufen. Auch die Wand des Abschnitts ist an sich biegeflexibel, d.h. insbesondere schlaff. Das Druckfluid ist alleine für die Versteifung des Abschnitts verantwortlich. Vorteilhafterweise kann der Bürstenhalter dadurch günstig hergestellt werden. Zudem sind keine komplizierten mechanischen Vorgänge in dem Bürstenhalter notwendig, die störanfällig sind und zu einem häufigen Ausfall von Waschbürsten führen können.

Die Versteifung des Abschnitts wird insbesondere dadurch hervorgerufen, dass der an der Wand des Abschnitts anliegende Fluiddruck eine Zugspannung auf den Abschnitt bewirkt. Die Knicksteifigkeit, also die Steifigkeit, die der Abschnitt gegenüber einem Abknicken aufweist, ist dabei insbesondere abhängig von dem anliegenden Druck, dem Durchmesser des Abschnitts und der Wanddicke des Abschnitts. Die Knicksteifigkeit ist dabei insbesondere durch das Knickmoment, welches die Größe des Biegemoments angibt, welches aufgebracht werden muss, um den Abschnitt abzuknicken, charakterisiert. Das Knickmoment wird dabei dann erreicht, wenn die Zugspannung aus dem Druck exakt gleich ist zu einer Spannung, die von einem Biegevorgang, wie er beispielsweise bei dem Andrücken des Bürstenhalters an eine Karosserieoberfläche vorgenommen wird, erzeugt wird.

Weiterhin wird es trotz dem Fehlen zusätzlicher mechanischer Bauteile möglich, dass ein Bürstenkopf, welcher an dem Bürstenhalter befestigt ist, im aktiven Zustand entlang einer Oberfläche eines Gegenstandes, beispielsweise einer Fahrzeugkarosserie, geführt werden kann. Denn der Abschnitt weist eine zweite Knicksteifigkeit auf, mit welcher der Abschnitt biegeunflexibel ist. Im inaktiven Zustand hingegen, in welchem der Abschnitt die erste Knicksteifigkeit aufweist, mit welcher der Abschnitt biegeflexibel ist, kann ein Bürstenkopf nicht zum Reinigen eines Gegenstandes verwendet werden. Denn im inaktiven Zustand hängt der Bürstenkopf schlaff herab. Vorteilhafterweise kann dadurch verhindert werden, dass eine Waschbürste ohne vorherige Aktivierung, beispielsweise durch Münzeinwurf, verwendet werden kann.

Der Abschnitt ist insbesondere schlauchförmig ausgebildet. Bei der schlauchförmigen Ausbildung ergibt sich insbesondere ein Kreisring als Querschnitt.

Die erste Knicksteifigkeit ist abhängig von dem für den Abschnitt verwendeten Material, dem Durchmesser des Abschnitts und der Wandstärke des Abschnitts. Für die zweite Knicksteifigkeit ist zusätzlich der auf die Wand des Abschnitts ausgeübte Fluiddruck von Belang. So wird die Knicksteifigkeit desselben Abschnitts verändert, obwohl der Abschnitt nach wie vor das gleiche Material aufweist.

Insbesondere liegt das Knickmoment, bei dem der Abschnitt im aktiven Zustand abknickt, bei einem Fluiddruck in einem Bereich von 2 bis 5 bar in einem Bereich von 1 bis 6 Nm.

Das Knickmoment, bei dem der Abschnitt im inaktiven Zustand knickt, liegt beispielsweise in einem Bereich von 0 bis 0,5 Nm. Der Abschnitt knickt im inaktiven Zustand vorteilhafterweise bereits bei einem geringen Biegemoment, so dass der Bürstenhalter im inaktiven Zustand nicht entlang einer Karosserieoberfläche geführt werden kann.

In einer Ausgestaltung ist der Abschnitt ein dünnwandiger und druckstabiler Druckbehälter. Die Dünnwandigkeit des Druckbehälters kann dabei gewährleisten, dass der Abschnitt im inaktiven Zustand des Bürstenhalters schlaff herabhängt. Dabei liegt die Dicke der Wand des Abschnitts insbesondere in einem Bereich von 0,1 bis 3 mm. Bevorzugt liegt die Wanddicke in einem Bereich von 1 mm bis 2 mm, insbesondere bei 1,6 mm. Durch die dünnwandige und druckstabile Ausgestaltung des Druckbehälters kann auf mechanische Elemente, welche den flexiblen Abschnitt versteifen, verzichtet werden.

Die Wand des Abschnitts ist insbesondere derart ausgestaltet, dass sie einem Fluiddruck von bis zu 150 bar standhält. Insbesondere hält die Wand des Abschnitts einem Fluiddruck in einem Bereich von 2 bis 20 bar stand. Zur Versteifung des Abschnitts ist dabei insbesondere ein Druck in einem Bereich von 2 bis 20 bar ausreichend. Der Druck liegt vorteilhafterweise in einem Bereich von 5 bis 15 bar, bevorzugt in einem Bereich von 10 bis 15 bar. Dadurch kann vorteilhafterweise gewährleistet werden, dass der Bürstenhalter so hart und unflexibel wird, dass er zur Reinigung eines Fahrzeugs verwendet werden kann, ohne dass der flexible Abschnitt des Bürstenhalters bei Anliegen eines hohen Druckes platzt.

Der Abschnitt ist insbesondere aus Kunstfasergewebe, Naturfasergewebe und/oder einem Elastomer, z. B. Gummi, gefertigt. Durch die Verwendung dieser Materialien kann gewährleistet werden, dass der Druckbehälter trotz seiner dünnen Wände sehr druckstabil ist und die geforderte erste und zweite Knicksteifigkeit aufweisen kann. Insbesondere ist die Außenhaut des Druckbehälters aus Kunst- oder Naturfasergewebe und die Innenhaut des Druckbehälters gummiert. Das Schlauchstück kann dabei ein Flachschlauchstück sein. Insbesondere ist das Schlauchstück ein Feuerwehrschlauchstück.

In einer Ausgestaltung ist in dem Bürstenhalter eine Durchflussleitung angeordnet, in welcher der Abschnitt angeordnet ist, wobei das Druckfluid durch den Abschnitt zu einem an dem Bürstenhalter befestigbaren Bürstenkopf leitbar ist. Hierbei kann das Druckfluid ein Waschfluid sein. Dies bedeutet, dass das gleiche Fluid zur Erzeugung des Fluiddruckes und zur Reinigung der Fahrzeugoberfläche verwendet werden kann. Dies trägt vorteilhafterweise dazu bei, dass der Betrieb einer Waschbürste mit einem solchen Bürstenhalter kostengünstig bereitgestellt werden kann.

In einer weiteren Ausgestaltung ist in Durchflussrichtung des Druckfluides hinter dem Abschnitt eine Verengung angeordnet, welche das Druckfluid in dem Abschnitt anstaut, um den Fluiddruck zu erzeugen. Die Verengung ist dabei insbesondere als Drossel ausgebildet. Der hierbei anfallende Staudruck ist dabei abhängig von dem Volumenstrom des Druckfluides und der Größe der Drossel. In dem Abschnitt können dabei Drücke von bis zu 150 bar entstehen. Üblicherweise wird es vermieden, flexibel ausgebildete Schlauchstücke mit solch hohen Drücken zu beaufschlagen, um ein Platzen des Schlauchstückes zu vermeiden. Der erfindungsgemäße Bürstenhalter ermöglicht vorteilhafterweise die Verwendung solch hoher Drücke. Die Drossel sorgt vorteilhafterweise dafür, dass der benötigte Fluiddruck für die Versteifung mit dem fließenden Fluid zuverlässig erreicht und über die Dauer des aktiven Zustandes gehalten werden kann. Die Drossel kann beispielsweise als Sprühdüse in dem Bürstenkopf ausgestaltet sein. Die Drossel wird insbesondere dann in dem Bürstenhalter angeordnet, wenn das Waschfluid als Druckfluid verwendet wird. Um den Druck für die Versteifung zu erhalten, wird dann eine Pumpe verwendet, die eine ausreichend hohe Pumpleistung aufweist.

In einer anderen Ausgestaltung weist der Bürstenhalter ein erstes Ende auf, an welchem ein Bürstenkopf befestigbar ist, wobei das erste Ende derart ausgestaltet ist, dass kein Druckfluid austreten kann. Der Bürstenhalter weist zudem ein zweites Ende auf, welches mit einem Druckfluidreservoir verbunden ist, aus welchem das Druckfluid in den Abschnitt leitbar ist. An dem Bürstenhalter ist eine separate Zuleitung angeordnet, über welche ein Waschfluid zu dem Bürstenkopf leitbar ist. Das erste Ende ist insbesondere geschlossen ausgestaltet. Dies bedeutet, dass der Abschnitt an dem Ende, an welchem ein Bürstenkopf befestigbar ist, eine weitere Wand aufweist, welche den Austritt des Druckfluides verhindert. Das Druckfluid und das Waschfluid unterscheiden sich in dieser Ausgestaltung voneinander. Das Druckfluid kann beispielsweise Luft, Wasser und/oder Öl sein. Bei dem Bürstenhalter handelt es sich dann um ein geschlossenes System mit einem eingeschlossenen Volumen. Das Waschfluid zum Reinigen der Fahrzeugoberfläche wird über eine separate Zuleitung zum Bürstenkopf geleitet. Diese Ausgestaltung ist insbesondere dann vorteilhaft, wenn das Material, aus dem der Abschnitt gefertigt ist, unbeständig gegenüber der Zusammensetzung des Waschfluides ist. Ein weiterer Vorteil dieser Ausgestaltung ist, dass der Sprühdruck für das Waschfluid unabhängig von dem Druck im Abschnitt ist. Der Sprühdruck kann separat eingestellt werden.

Insbesondere kann die Anpresskraft des Bürstenkopfes an eine Oberfläche über einen Vordruck und/oder den Durchmesser des Druckbehälters bestimmbar sein. Dadurch wird vorteilhafterweise gewährleistet, dass eine Maximalkraft, mit welcher der Bürstenkopf an die Fahrzeugoberfläche gepresst werden kann, nicht überschritten wird. Hierdurch kann verhindert werden, dass die zu reinigende Oberfläche Schaden nimmt.

Die Härte der Federung des Bürstenhalters ist insbesondere mittels der Länge und/oder des Durchmessers des Abschnitts bestimmbar. Je kürzer der Druckbehälter ausgestaltet ist, desto starrer wirkt der Bürstenhalter, wenn der Abschnitt druckbeaufschlagt ist. Je länger hingegen der Druckbehälter ausgestaltet ist, desto weicher und federnder wirkt der Bürstenhalter, wenn der Abschnitt druckbeaufschlagt ist. Dabei kann die Länge des Abschnitts in einem Bereich von 3 cm bis zu der vollständigen Länge des Bürstenhalters liegen. Ist der Bürstenhalter beispielsweise 100 cm lang, kann der Abschnitt eine Länge von 100 cm aufweisen und somit die gesamte Länge des Bürstenhalters bereitstellen. Die Länge des Abschnitts kann jedoch auch im Vergleich zur gesamten Länge des Bürstenhalters kurz sein. Insbesondere sollte die Länge des Abschnitts so gewählt werden, dass eine an dem Bürstenhalter befestigte Waschbürste nicht mit Kunststoff- und/oder Stahlteilen des Bürstenhalters zusammenstößt. Bei einer langen federnden Variante des Bürstenhalters kann durch eine Anpassung des Vordruckes die Steifigkeit des Bürstenhalters im aktiven Zustand variiert werden. Durch diese Ausgestaltung kann die Festigkeit, mit welcher der Bürstenkopf an die Oberfläche des Fahrzeugs gedrückt werden muss, um eine reinigende Wirkung zu erzielen, angepasst werden.

Die Erfindung betrifft ferner eine Waschbürste mit einem solchen Bürstenhalter und einem Bürstenkopf, der an einem Ende des Bürstenhalters befestigt ist. Die Waschbürste weist dabei alle Vorteile des erfindungsgemäßen Büstenhalters auf.

Zudem betrifft die Erfindung ein Waschsystem mit einer erfindungsgemäßen Waschbürste, einem Druckfluidreservoir und einer Pumpe, die das in dem Druckfluidreservoir befindliche Druckfluid in einen Bürstenhalter der Waschbürste pumpt.

Die Erfindung wird nun anhand von Ausführungsbeispielen mit Bezug zu den beigefügten Zeichnungen erläutert.
- Figur 1: zeigt ein erstes Ausführungsbeispiel einer erfindungsgemäßen Waschbürste mit einem erfindungsgemäßen Bürstenhalter im inaktiven Zustand,
- Figur 2: zeigt die erfindungsgemäße Waschbürste mit dem erfindungsgemäßen Bürstenhalter des ersten Ausführungsbeispiels im aktiven Zustand,
- Figur 3: zeigt ein zweites Ausführungsbeispiel der erfindungsgemäßen Waschbürste,
- Figuren 4 bis 6: zeigen die Abläufe innerhalb eines Druckbehälters des erfindungsgemäßen Bürstenhalters, und
- Figur 7: zeigt den Verlauf des Knickmomentes in Abhängigkeit von einem Staudruck im Inneren des Druckbehälters.

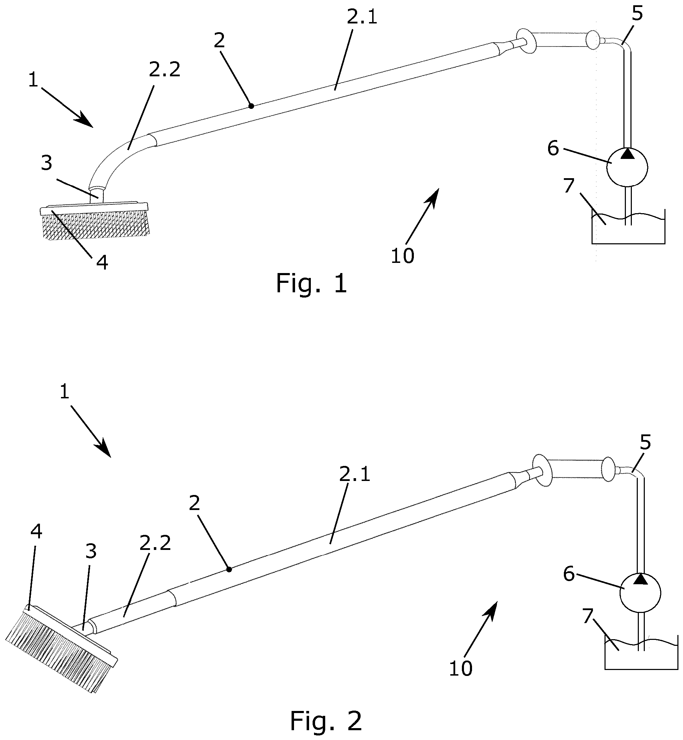

Mit Bezug zu den Figuren 1 und 2 wird ein Ausführungsbeispiel für eine erfindungsgemäße Waschbürste 1 mit einem erfindungsgemäßen Bürstenhalter 2 erläutert.

Die Waschbürste 1 kann insbesondere zur Reinigung eines Fahrzeugs verwendet werden. Sie ist beispielsweise in einer Selbstbedienung-Waschanlage angeordnet und kann aufgrund der Ausgestaltung des Bürstenhalters 2 nur dann verwendet werden, wenn ein Geldeinwurf registriert worden ist.

Die Waschbürste 1 umfasst an einem Ende einen Bürstenkopf 4. Der Bürstenkopf 4 ist dazu ausgestaltet, entlang der Oberfläche eines Fahrzeugs geführt zu werden. Hierzu kann an dem Bürstenkopf 4 ein Waschfluid 7 austreten, welches mittels der Borsten des Bürstenkopfes 4 auf der Oberfläche der Fahrzeugkarosserie verteilt werden kann. Die Waschbürste 1 ist hierzu mit einem Reservoir, in welchem sich das Waschfluid 7 befindet, über eine Zuleitung 5 verbunden. Die Zuleitung 5 endet dabei in dem Bürstenhalter.

Die Waschbürste 1 umfasst weiterhin einen erfindungsgemäßen Bürstenhalter 2. Der Bürstenhalter 2 umfasst einen starr ausgebildeten Abschnitt 2.1 und einen flexiblen Abschnitt 2.2. Der starre Abschnitt 2.1 des Bürstenhalters 2 ist dazu ausgebildet, von einer Person in die Hand genommen zu werden, um die gesamte Waschbürste 1 zu führen. Hierzu kann beispielsweise ein Eingriff oder ein Griff an dem starren Abschnitt 2.1 angeordnet sein.

Der flexible Abschnitt 2.2 des Bürstenhalters 2 ist insbesondere als dünnwandiger und druckstabiler Druckbehälter ausgestaltet. Insbesondere ist der Druckbehälter 2.2 ein flexibles Schlauchstück, welches aus Kunststofffasern, Naturstofffasern und/oder einem Elastomer, z. B. Gummi gefertigt ist. Durch die Verwendung dieser Materialien kann die Druckstabilität trotz der Dünnwandigkeit des Druckbehälters 2.2 gewährleistet werden. Die Wanddicke des Druckbehälters 2.2 liegt insbesondere bei 1,6 mm

Figur 1 zeigt die Waschbürste 1 in einem inaktiven Zustand. Dieser liegt vor, wenn kein Fluiddruck an dem Bürstenhalter 2 anliegt. Der Druckbehälter 2.2 weist im inaktiven Zustand eine erste Knicksteifigkeit auf, bei welcher der Druckbehälter 2.2 biegeflexibel ist. Der Wert, den die Knicksteifigkeit im inaktiven Zustand aufweist ist dabei abhängig von dem für den Druckbehälter 2.2 verwendeten Material und von dem Querschnitt, den der Druckbehälter 2.2 aufweist. Beispielsweise ist der Druckbehälter 2.2 schlauchartig ausgestaltet. Der Querschnitt kann dann der eines Kreisringes oder der eines Ellipsenringes, je nach Ausgestaltung des Schlauchstückes, sein.

Dadurch, dass der Druckbehälter 2.2 im inaktiven Zustand biegeflexibel ist, übt das Gewicht des Bürstenkopfes 4 ein Biegemoment auf den Druckbehälter 2.2 aus, welches größer ist als das Knickmoment des Druckbehälters 2.2 im inaktiven Zustand. Dadurch hängt der Bürstenkopf 4 schlaff von dem Bürstenhalter 2 herab. Die Waschbürste 1 kann daher im inaktiven Zustand nicht zur Reinigung einer Fahrzeugoberfläche verwendet werden.

Wird ein Münzeinwurf registriert, wird das Waschfluid 7 über eine Pumpe in den Bürstenhalter 2 gepumpt. Dabei wird das Waschfluid 7 durch den starren Abschnitt 2.1 in den Druckbehälter 2.2 eingeleitet. Das Waschfluid 7 hat dabei zugleich die Funktion des Druckfluides.

Figur 2 zeigt die Waschbürste 1 in einem aktiven Zustand. Dieser liegt vor, wenn das Druckfluid, im vorliegenden Beispiel das Waschfluid 7, in den Bürstenhalter 2 eingeleitet wurde.

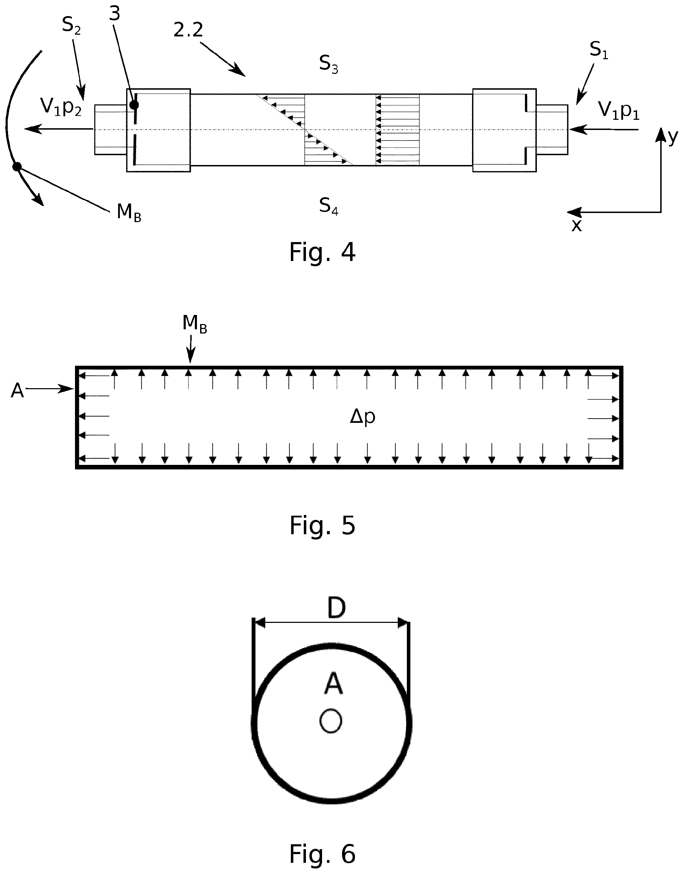

Mit Bezug zu den Figuren 4 bis 6 wird die Funktionsweise des Druckbehälters 2.2 des erfindungsgemäßen Bürstenhalters 2 im Detail erläutert, jedoch ohne die Erfindung auf dieses Erklärungsmodell für das Erzeugen der Knicksteifigkeit zu beschränken. Das Erklärungsmodell enthält auch Vereinfachungen, die Randeffekte außer Acht lassen.

Der Druckbehälter 2.2 wird im aktiven Zustand über eine Zulaufseite S1 von der Pumpe 6 mit Druckfluid versorgt. Die Pumpe 6 ist dabei in der Lage, einen Druck p₁ in einem Bereich von 5 bis 15 bar bei einem gewünschten Volumenstrom V₁ zu erzeugen. Der Volumenstrom V₁ ist so bemessen, dass die Waschbürste 1 ausreichend für den Autowaschprozess bewässert ist. Der Druck p₁ ist dabei nicht notwendig, um die Reinigung eines Fahrzeugs zu ermöglichen, sondern um den Druckbehälter 2.2 zu versteifen. Dies geschieht dadurch, dass der Druckbehälter 2.2 auf seiner Ausgangsseite S2 eine Verengung 3 aufweist. Im Beispiel der Figur 4 ist hierzu insbesondere die Drossel 3 aus den Figuren 1 und 2 gezeigt, die so dimensioniert ist, dass der gewünschte Volumenstrom nur noch mit sehr geringem Restdruck p₂, der kleiner als 1 bar ist, in den Bürstenkopf 4 strömt. Die Drossel 3 kann dabei insbesondere als Sprühdüse in dem Bürstenkopf 4 ausgestaltet sein. Der Differenzdruck Δp zwischen p₁ und p₂ wirkt in Form von Staudruck auf die mechanische Struktur des Druckbehälters 2.2. Der Staudruck wirkt gleichmäßig auf alle Flächen des Druckbehälters 2.2 und führt dazu, dass sich der ansonsten schlaff herabhängende Druckbehälter 2.2 aufrichtet. Der Druck auf die Stirnfläche A bewirkt dabei eine Zugspannung in x-Richtung im Mantelquerschnitt des Druckbehälters 2.2, der in Figur 6 gezeigt ist. Die Zugspannung ist dabei abhängig vom Mantelquerschnitt, dem Durchmesser D, der daraus resultierenden Stirnfläche A und dem Druck Δp.

Wird nun der Druckbehälter 2.2 mit einem Biegemoment M_{B} belastet, wie dies bei einem Andrücken des Waschbürstenkopfes 4 an die Karosserieoberfläche eines Fahrzeugs geschieht, wird dem Spannungsverlauf aus dem Druck ein Spannungsverlauf aus Biegung überlagert. Dabei addiert sich auf einer Seite S3 des Druckbehälters 2.2 die Spannung auf die Mantelfläche M_{F}, wohin sich die Spannung auf der anderen Seite S4 des Druckbehälters 2.2 auf die Mantelfläche M_{F} reduziert. Wird der Druckbehälter 2.2 langsam mit einer Biegung belastet, geschieht dies ohne eine nennenswerte Verformung, bis die Biegungszugspannung und die Druckzugspannung exakt die gleiche Größe haben. Das Biegemoment das bei diesem Zustand anliegt, wird als Knickmoment bezeichnet.

Wird das Knickmoment überschritten, verformt sich die Wandung des Druckbehälters 2.2 und knickt ein. Der Druckbehälter 2.2 verliert seine zylindrische Form und kann nicht mehr gezielt an einer Karosserieoberfläche eines Fahrzeugs geführt werden.

In Tabelle 1 sind tatsächlich gemessene Werte für das Knickmoment bei einem entsprechenden an der Mantelfläche M_{F} des Druckbehälters 2.2 anliegenden Druck bei einem Druckbehälter 2.2 mit einem Durchmesser D = 28 mm und einer Wandstärke des Mantels von 1,6 mm des Druckbehälters 2.2 gezeigt.

**Tabelle 1: Linke Spalte: Staudruck, der an der Innenfläche des Mantels des Druckbehälters anliegt. Rechte Spalte: Knickmoment, welches sich mit dem Staudruck aus der rechten Spalte, einem Durchmesser D = 28 mm des Druckbehälters 2.2 und einer Wandstärke des Mantels WS = 1,6 mm des Druckbehälters 2.2 ergibt.**

| **Δp [bar]** | **Knickmoment [Nm]** |
|---|---|
| 2 | 1,4 |
| 3 | 2,45 |
| 4 | 3,5 |
| 5 | 4,9 |

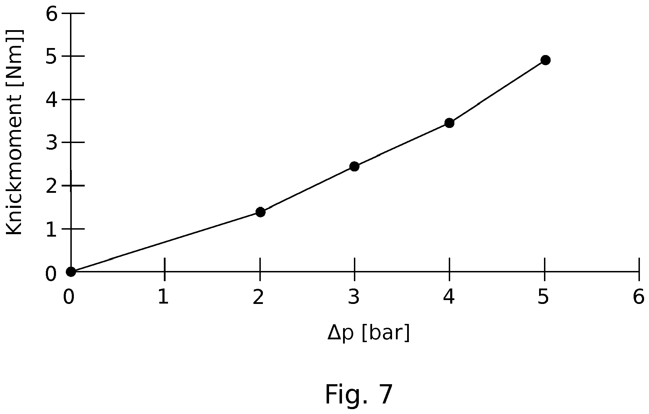

Die Werte aus Tabelle 1 sind dabei als Verlauf mit Bezug zu Figur 7 graphisch dargestellt.

Im aktiven Zustand richtet sich also der Druckbehälter 2.2 derart aus, dass er eine Verlängerung zu dem ersten Abschnitt 2.1 des Bürstenhalters 2 darstellt. Der Abschnitt 2.2 des Bürstenhalters 2 wird versteift. Daraus ergibt es sich, dass die Waschbürste 1 zur Reinigung der Fahrzeugoberfläche verwendet werden kann. Bei anderen Geometrien des Abschnitts 2.2 sind jedoch auch andere Formen des versteiften Abschnitts 2.2 realisierbar.

Den Fluiddruck, den der Druckbehälter 2.2 aushalten muss, liegt dabei bei einem Wert von bis zu 20 bar. Eine ausreichende Versteifung des Druckbehälters 2.2 kann bereits mit einem Druck erreicht werden, der in einem Bereich von 2 bis 3 bar liegt. Im vorliegenden Ausführungsbeispiel wird jedoch ein höherer Fluiddruck eingestellt. Er ist insbesondere in einem Bereich von 5 bis 15 bar, bevorzugt in einem Bereich von 10 bis 15 bar. Dadurch wird der Druckbehälter 2.2 so hart und unflexibel, dass die Waschbürste 1 an der Oberfläche eines Fahrzeugs entlang geführt werden kann.

Die Länge des Druckbehälters 2.2 beträgt beispielsweise 20 cm. Insbesondere kann die Länge des Druckbehälters 2.2 in einem Bereich von 3 cm bis zur vollständigen Länge des Bürstenhalters 2 liegen. Über die Länge des Druckbehälters 2.2 kann die Härte der Federung der gesamten Waschbürste 1 eingestellt werden. Je länger der Druckbehälter 2.2 ausgestaltet ist, desto federnder ist seine Wirkung. Hierdurch kann die Anpresskraft konstant gehalten werden.

Die Länge des Druckbehälters 2.2 kann beispielsweise variabel sein. Dabei kann durch den starren Abschnitt 2.1 des Bürstenhalters 2 ein Schlauch geführt werden, der teilweise an einem Ende des starren Abschnitts 2.1 herausgeführt wird. Insbesondere kann die Zuleitung 5 durch den starren Abschnitt 2.1 des Bürstenhalters 2 geführt werden. Die Zuleitung ist dann gleichzeitig eine Durchflussleitung, in welcher der Druckbehälter angeordnet ist. Der Teil der Durchflussleitung 5, der aus dem starren Abschnitt 2.1 heraushängt, ist der Druckbehälter 2.2. Die Länge des Druckbehälters 2.2 kann dadurch variiert werden, dass die Durchflussleitung 5 weiter aus dem starren Abschnitt 2.1 herausgezogen wird oder weiter in den starren Abschnitt 2.1 hinein geführt wird. Der starre Abschnitt 2.1 wird dabei beispielsweise von einem Rohr gebildet, durch welches der Druckbehälter 2.2 geführt werden kann.

Alternativ wird der von einem Schlauchstück gebildete Druckbehälter 2.2 nicht durch das Rohr 2.1 geführt, sondern ist an einem Ende des Rohres 2.1 mit diesem flüssigkeitsdicht verbunden. Weiterhin kann die zweite Knicksteifigkeit des Druckbehälters 2.2 während des Betriebs der Waschbürste 1 dadurch verändert werden, dass der Pumpenvordruck verändert wird.

Über den Pumpenvordruck kann zudem geregelt werden, bei welcher maximalen Anpresskraft die Waschbürste 1 nachgeben soll. Dies kann zudem über den Durchmesser des Druckbehälters 2.2 bestimmt werden.

Die Waschbürste 1 mit dem Bürstenhalter 2, die Pumpe 6 und das Waschfluidreservoir bilden dabei ein erstes Ausführungsbeispiel eines erfindungsgemäßen Waschsystems 10.

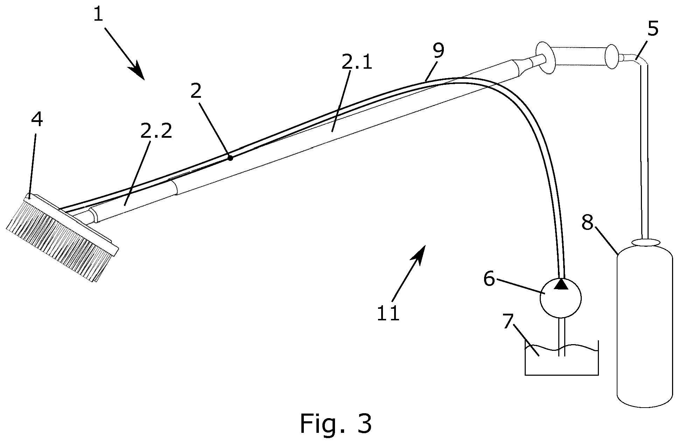

Mit Bezug zu Figur 3 wird ein zweites Ausführungsbeispiel der erfindungsgemäßen Waschbürste 1 erläutert.

Dabei ist der Bürstenhalter 2 der Waschbürste 1 als geschlossenes System mit einem eingeschlossenen Volumen ausgestaltet. Hierzu ist der Bürstenhalter 2 an dem Ende, an welchem der Bürstenkopf 4 angeordnet ist, geschlossen, d.h. beispielsweise mit einer zusätzlichen stirnseitigen Wand, ausgestaltet. An seinem gegenüberliegenden Ende ist der Bürstenhalter 2 mit einem separat bereitgestellten Reservoir eines Druckfluides 8 verbunden. In diesem Fall wird als Druckfluid 8 beispielsweise Wasser, Luft und/oder Öl verwendet. Im gezeigten Ausführungsbeispiel wird als Druckfluid 8 Luft aus einer Druckflasche verwendet.

Das zum Reinigen des Fahrzeugs benötige Waschfluid 7 kann dann nicht durch den Bürstenhalter 2 zu dem Bürstenkopf 4 geleitet werden. Es wird daher eine separate Zuleitung 9 entlang der Außenseite des Bürstenhalters 2 bis zu dem Bürstenkopf 4 geführt.

Eine Drossel 3 zum Anstauen des Druckfluides 8 ist nicht notwendig.

Dies ist insbesondere dann vorteilhaft, wenn das Material des Druckbehälters 2.2 unbeständig gegenüber der Zusammensetzung des Waschfluides 7 ist. Zudem ist der Sprühdruck, mit welchem das Waschfluid aus der Zuleitung 9 herausströmt, unabhängig von dem in dem Druckbehälter vorherrschenden Druck. Der Sprühdruck kann separat eingestellt werden.

Weiterhin kann die Zuleitung 9 für das Waschfluid auch innerhalb des Bürstenhalters 2 geführt werden. An dem geschlossenen Ende des Bürstenhalters 2 ist dann ein Durchlass angeordnet, durch welchen die Zuleitung 9 durchgeführt werden kann. An diesem Durchlass müssen dann Dichtungen angebracht werden, die dem an dem Druckbehälter 2.2 anliegenden Druck standhalten, so dass an dem Ende, an welchem der Bürstenkopf 4 befestigt ist, kein Druckfluid 8 austreten kann.

Die Waschbürste 1 mit dem Bürstenhalter 2, die Pumpe 6, das Druckfluidreservoir 8 und das Waschfluidreservoir bilden dabei ein zweites Ausführungsbeispiel eines erfindungsgemäßes Waschsystems 11.

Bei dieser Ausgestaltung der Waschbürste 1 wirkt dann der gesamte Druck p1 als Staudruck, da kein Fluid auf einer Ausgangsseite zum Bürstenkopf 4 hin abfließen kann.

Die beiden Ausführungsbeispiele sind dabei hinsichtlich der detaillierten Ausgestaltung des Bürstenhalters 2, was seine Knicksteifigkeit, Länge, Federung und Anpresskraft betrifft miteinander kombinierbar.

### Bezugszeichenliste

- 1: Waschbürste
- 2: Bürstenhalter
- 2.1: erster Abschnitt des Bürstenhalters
- 2.2: zweiter Abschnitt des Bürstenhalters; Druckbehälter
- 3: Drossel
- 4: Bürstenkopf
- 5: Zuleitung von der Pumpe; Durchflussleitung
- 6: Pumpe
- 7: Waschfluid; Druckfluid
- 8: Druckfluid
- 9: Zuleitung
- 10, 11: Waschsystem
- D: Durchmesser
- MF: Mantelfläche
- MB: Biegemoment
- p1; p2: Druck
- Δp: Differenzdruck; Staudruck
- S1 - S4: Seiten des Druckbehälters
- V1; V2: Volumenstrom

## Patentansprüche

1. Bürstenhalter (2) für eine Waschbürste (1) mit
einem Abschnitt (2.2), welcher eine Wand aufweist und in welchen ein Druckfluid (7; 8) einleitbar ist, wobei der Abschnitt in einem inaktiven Zustand ohne Anliegen eines von dem Druckfluid (7; 8) erzeugten Fluiddruckes eine erste Knicksteifigkeit aufweist, mit welcher der Abschnitt (2.2) im inaktiven Zustand biegeflexibel ist,
**dadurch gekennzeichnet, dass**
in einem aktiven Zustand in den Abschnitt (2.2) das Druckfluid (7; 8) eingeleitet ist, wobei der Abschnitt (2.2) im aktiven Zustand eine zweite Knicksteifigkeit aufweist, welche dadurch erzeugt wird, dass das in den Abschnitt eingeleitete Druckfluid (7; 8) einen Fluiddruck direkt auf die Wand des Abschnitts (7; 8) ausübt, so dass der Abschnitt (2.2) im Wesentlichen biegeunflexibel ist.

2. Bürstenhalter (2) nach Anspruch 1,
**dadurch gekennzeichnet, dass**
der Abschnitt (2.2) schlauchförmig ausgebildet ist.

3. Bürstenhalter (2) nach Anspruch 1 oder 2,
**dadurch gekennzeichnet, dass**
das Knickmoment, bei dem der Abschnitt (2.2) im aktiven Zustand knickt, bei einem Fluiddruck in einem Bereich von 2 bis 5 bar in einem Bereich von 1 bis 6 Nm liegt.

4. Bürstenhalter (2) nach einem der vorhergehenden Ansprüche,
**dadurch gekennzeichnet, dass**
das Knickmoment, bei dem der Abschnitt im inaktiven Zustand knickt, in einem Bereich von 0 bis 0,5 Nm liegt.

5. Bürstenhalter (2) nach einem der vorhergehenden Ansprüche,
**dadurch gekennzeichnet, dass**
der Abschnitt (2.2) ein dünnwandiger und druckstabiler Druckbehälter ist.

6. Bürstenhalter (2) nach einem der vorhergehenden Ansprüche,
**dadurch gekennzeichnet, dass**
die Dicke der Wand des Abschnitts (2.2) in einem Bereich von 0,1 bis 3 mm liegt.

7. Bürstenhalter (2) nach einem der vorhergehenden Ansprüche,
**dadurch gekennzeichnet, dass**
die Wand des Abschnitts (2.2) derart ausgestaltet ist, dass sie einem Fluiddruck von bis zu 150 bar standhält.

8. Bürstenhalter (2) nach einem der vorhergehenden Ansprüche,
**dadurch gekennzeichnet, dass**
der Abschnitt (2.2) aus Kunstfasergewebe, Naturfasergewebe und/oder einem Elastomer gefertigt ist.

9. Bürstenhalter (2) nach einem der vorhergehenden Ansprüche,
**dadurch gekennzeichnet, dass**
in dem Bürstenhalter (2) eine Durchflussleitung (5) angeordnet ist, in welcher der Abschnitt (2.2) angeordnet ist, wobei das Druckfluid (7; 8) durch den Abschnitt (2.2) zu einem an dem Bürstenhalter (2) befestigbaren Bürstenkopf (4) leitbar ist.

10. Bürstenhalter (2) nach einem der vorhergehenden Ansprüche,
**dadurch gekennzeichnet, dass**
in Durchflussrichtung des Druckfluides (7; 8) hinter dem Abschnitt (2.2) eine Verengung (3) angeordnet ist, welche das Druckfluid (7; 8) in dem Abschnitt (2.2) anstaut, um den Fluiddruck zu erzeugen.

11. Bürstenhalter (2) nach einem der Ansprüche 1 bis 8,
**dadurch gekennzeichnet, dass**
der Bürstenhalter (2) ein erstes Ende aufweist, an welchem ein Bürstenkopf (4) befestigbar ist, wobei das erste Ende derart ausgestaltet ist, dass kein Druckfluid (8) austreten kann,
der Bürstenhalter (2) ein zweites Ende aufweist, welches mit einem Druckfluidreservoir (8) verbunden ist, aus welchem das Druckfluid (8) in den Abschnitt (2.2) leitbar ist, und
an dem Bürstenhalter (2) eine separate Zuleitung (9) angeordnet ist, über welche ein Waschfluid (7) zu dem Bürstenkopf (4) leitbar ist.

12. Bürstenhalter (2) nach einem der vorhergehenden Ansprüche,
**dadurch gekennzeichnet, dass**
die Härte der Federung des Bürstenhalters (2) mittels der Länge und/oder dem Durchmesser des Abschnitts (2.2) bestimmbar ist.

13. Bürstenhalter (2) nach einem der vorhergehenden Ansprüche,
**dadurch gekennzeichnet, dass**
die Länge des Abschnitts (2.2) in einem Bereich von 3 cm bis zu der vollständigen Länge des Bürstenhalters (2) liegt.

14. Waschbürste (1) mit einem Bürstenhalter (2) nach einem der Ansprüche 1 bis 13 und einem Bürstenkopf (4), der an einem Ende des Bürstenhalters (2) befestigt ist.

15. Waschsystem (10; 11) mit einer Waschbürste (1) nach Anspruch 14, einem Druckfluidreservoir und einer Pumpe (6), die das in dem Druckfluidreservoir befindliche Druckfluid in einen Bürstenhalter (2) der Waschbürste (1) pumpt.

## Claims

1. Brush holder (2) for a washing brush (1), having a portion (2.2) which has a wall and into which a pressurized fluid (7; 8) is able to be introduced, wherein, in an inactive state without application of a fluid pressure brought about by the pressurized fluid (7; 8), the portion has a first kinking strength with which the portion (2.2) is flexible in the inactive state,
**characterized in that**,
in an active state, the pressurized fluid (7; 8) is introduced into the portion (2.2), wherein, in the active state, the portion (2.2) has a second kinking strength which is brought about by the pressurized fluid (7; 8) introduced into the portion exerting a fluid pressure directly on the wall of the portion (7; 8) such that the portion (2.2) is substantially inflexible.

2. Brush holder (2) according to Claim 1,
**characterized in that**
the portion (2.2) is formed in a tubular manner.

3. Brush holder (2) according to Claim 1 or 2,
**characterized in that**
the kinking moment at which the portion (2.2) kinks in the active state is in a range from 1 to 6 Nm at a fluid pressure in a range from 2 to 5 bar.

4. Brush holder (2) according to one of the preceding claims,
**characterized in that**
the kinking moment at which the portion kinks in the inactive state is in a range from 0 to 0.5 Nm.

5. Brush holder (2) according to one of the preceding claims,
**characterized in that**
the portion (2.2) is a thin-walled and pressure-resistant pressure vessel.

6. Brush holder (2) according to one of the preceding claims,
**characterized in that**
the thickness of the wall of the portion (2.2) is in a range from 0.1 to 3 mm.

7. Brush holder (2) according to one of the preceding claims,
**characterized in that**
the wall of the portion (2.2) is configured such that it withstands a fluid pressure of up to 150 bar.

8. Brush holder (2) according to one of the preceding claims,
**characterized in that**
the portion (2.2) is produced from synthetic-fibre fabric, natural-fibre fabric and/or an elastomer.

9. Brush holder (2) according to one of the preceding claims,
**characterized in that**,
in the brush holder (2), a flow-through line (5) is arranged, in which the portion (2.2) is arranged, wherein the pressurized fluid (7; 8) is able to be passed through the portion (2.2) to a brush head (4) that is able to be fastened to the brush holder (2).

10. Brush holder (2) according to one of the preceding claims,
**characterized in that**,
downstream of the portion (2.2) in the flow-through direction of the pressurized fluid (7; 8), a constriction (3) is arranged, which backs up the pressurized fluid (7; 8) in the portion (2.2) in order to bring about the fluid pressure.

11. Brush holder (2) according to one of Claims 1 to 8,
**characterized in that**
the brush holder (2) has a first end, to which a brush head (4) is able to be fastened, wherein the first end is configured such that no pressurized fluid (8) can emerge,
the brush holder (2) has a second end, which is connected to a pressurized-fluid tank (8) from which the pressurized fluid (8) is able to be passed into the portion (2.2), and,
on the brush holder (2), a separate feed line (9) is arranged, via which a washing fluid (7) is able to be passed to the brush head (4).

12. Brush holder (2) according to one of the preceding claims,
**characterized in that**
the hardness of the resilience of the brush holder (2) is able to be determined by means of the length and/or the diameter of the portion (2.2).

13. Brush holder (2) according to one of the preceding claims,
**characterized in that**
the length of the portion (2.2) is in a range from 3 cm to the full length of the brush holder (2).

14. Washing brush (1) having a brush holder (2) according to one of Claims 1 to 13 and a brush head (4), which is fastened to one end of the brush holder (2).

15. Washing system (10; 11) having a washing brush (1) according to Claim 14, a pressurized-fluid reservoir and a pump (6), which pumps the pressurized fluid located in the pressurized-fluid reservoir into a brush holder (2) of the washing brush (1).

## Revendications

1. Porte-brosse (2) pour une brosse de lavage (1), comprenant
une portion (2.2), laquelle possède une paroi et dans laquelle peut être injecté un fluide sous pression (7 ; 8), la portion, dans un état inactif sans application d'une pression de fluide générée par le fluide sous pression (7 ; 8), possédant une première résistance au flambage avec laquelle la portion (2.2) à l'état inactif est flexible en pliage,
**caractérisé en ce que**
dans un état actif, le fluide sous pression (7 ; 8) est injecté dans la portion (2.2), la portion (2.2) dans l'état actif possédant une deuxième résistance au flambage, laquelle est générée par le fait que le fluide sous pression (7 ; 8) injecté dans la portion exerce une pression de fluide directement sur la paroi de la portion (2.2), de sorte que la portion (7 ; 8) est sensiblement non flexible en pliage.

2. Porte-brosse (2) selon la revendication 1,
**caractérisé en ce que** la portion (2.2) est réalisée en forme de tuyau.

3. Porte-brosse (2) selon la revendication 1 ou 2,
**caractérisé en ce que** le moment de flambage avec lequel la portion (2.2) se coude à l'état actif est compris dans une plage de 1 à 6 Nm en présence d'une pression de fluide dans une plage de 2 à 5 bar.

4. Porte-brosse (2) selon l'une des revendications précédentes, **caractérisé en ce que** le moment de flambage avec lequel la portion se coude à l'état inactif est compris dans une plage de 0 à 0,5 Nm.

5. Porte-brosse (2) selon l'une des revendications précédentes, **caractérisé en ce que** la portion (2.2) est un récipient sous pression à paroi mince et stable à la pression.

6. Porte-brosse (2) selon l'une des revendications précédentes, **caractérisé en ce que** l'épaisseur de la paroi de la portion (2.2) est comprise dans une plage de 0,1 à 3 mm.

7. Porte-brosse (2) selon l'une des revendications précédentes, **caractérisé en ce que** la paroi de la portion (2.2) est configurée de telle sorte qu'elle résiste à une pression de fluide jusqu'à 150 bar.

8. Porte-brosse (2) selon l'une des revendications précédentes, **caractérisé en ce que** la portion (2.2) est fabriquée en tissu de fibres synthétiques, en tissu de fibres naturelles et/ou en un élastomère.

9. Porte-brosse (2) selon l'une des revendications précédentes, **caractérisé en ce qu'**une conduite de passage (5) est disposée dans le porte-brosse (2), dans laquelle est disposée la portion (2.2), le fluide sous pression (7 ; 8) pouvant être conduit à travers la portion (2.2) vers une tête de brosse (4) pouvant être fixée au porte-brosse (2).

10. Porte-brosse (2) selon l'une des revendications précédentes, **caractérisé en ce qu'**un rétrécissement (3) est disposé derrière la portion (2.2) dans le sens de l'écoulement du fluide sous pression (7 ; 8), lequel accumule le fluide sous pression (7 ; 8) dans la portion (2.2) afin de générer la pression de fluide.

11. Porte-brosse (2) selon l'une des revendications 1 à 8, **caractérisé en ce que**
le porte-brosse (2) possède une première extrémité à laquelle peut être fixée une tête de brosse (4), la première extrémité étant configurée de telle sorte que du fluide sous pression (8) ne peut pas en sortir,
le porte-brosse (2) possède une deuxième extrémité qui est reliée à un réservoir à fluide sous pression (8) depuis lequel le fluide sous pression (8) peut être conduit dans la portion (2.2), et
une conduite d'arrivée (9) séparée est disposée au niveau du porte-brosse (2), par le biais de laquelle un fluide de lavage (7) peut être conduit vers la tête de brosse (4).

12. Porte-brosse (2) selon l'une des revendications précédentes, **caractérisé en ce que** la dureté de la suspension à ressort du porte-brosse (2) peut être déterminée au moyen de la longueur et/ou du diamètre de la portion (2.2).

13. Porte-brosse (2) selon l'une des revendications précédentes, **caractérisé en ce que** la longueur de la portion (2.2) est comprise dans une plage de 3 cm à la longueur totale du porte-brosse (2).

14. Brosse de lavage (1) comprenant un porte-brosse (2) selon l'une des revendications 1 à 13 et une tête de brosse (4) qui est fixée à une extrémité du porte-brosse (2).

15. Système de lavage (10 ; 11), comprenant une brosse de lavage (1) selon la revendication 14, un réservoir à fluide sous pression et une pompe (6) qui pompe le fluide sous pression qui se trouve dans le réservoir à fluide sous pression dans un porte-brosse (2) de la brosse de lavage (1).
